# EUROPEAN PATENT APPLICATION

(11) **EP 1 699 009 A1**
(43) Date of publication of application: **06.09.2006**
(21) Application number: 06110046.7
(22) Date of filing: 16.02.2006
(51) Int. Cl.: G06Q 10/00

(54) **Automatic user interface updating in business processes**

(30) Priority: 04.03.2005 US 72710
(71) Applicant: MICROSOFT CORPORATION, Redmond, WA 98052 (US)
(72) Inventor: Glaeske, Brian Russell c/o MICROSOFT CORPORATION, Redmond, WA 98052 (US); Iverson, Eric David c/o MICROSOFT CORPORATION, Redmond, WA 98052 (US); Nelson, Kimberley Ann c/o MICROSOFT CORPORATION, Redmond, WA 98052 (US)
(74) Representative: Grünecker, Kinkeldey, Stockmair & Schwanhäusser Anwaltssozietät

(57) **Abstract**

A method and apparatus for updating a user interface for a business process in response to a change in the business process instigated by a user. The change is detected by the application and the affected user interfaces are updated to reflect the changed process without the need to recompile the application. Changes to the user interface are generated from known portions of the existing user interfaces as well as the information added during the new or reordered steps in the process.

## Description

### BACKGROUND OF THE INVENTION

The present invention relates to computer user interfaces. In particular the present invention is directed to automatically updating and generating user interfaces in business process software when a user either adds a step to the process or reorders the steps in the process.

User interfaces are the primary means by which computer users interact with computers. A user interface generally includes a display of one or more controls that provide information to a user, generally in visual form, and receive information from the user to instruct a computing device. One of the primary goals of user interface design is to provide a host of functions to a user in a simple, intuitive form.

As computer software and hardware provide more and more complex functionality, it becomes increasingly important to provide user interfaces that allow users to navigate such complex functionality in a relatively simple and intuitive manner. One area where more and more complex functionality is being provided is in business applications. Such software is generally used by a business to automate, or electronically facilitate some or all of the business's functions. For example, computers are now used to track inventory, manage a human relations department, and perform accounting functions, as well as a host of other functions. Since virtually every company's demands for a business application vary, it would be inefficient to write a complete business solution for each such company from scratch. Instead, such applications are generally created in two parts.

First, a software company, such as Microsoft Corporation of Redmond, Washington, creates a development framework to provide significant tools and software classes related to businesses. Then, a developer, such as an Independent Software Vendor (ISV), builds a tailored or customized business application specific to a company using the framework application. This regime is highly successful in that it provides extremely powerful and adaptable tools in such a manner that they can be significantly tailored and customized in order to match a company's needs.

One potential drawback of the manner in which such software is developed is that, if the company or ISV wishes to alter the manner in which the user interface is displayed, or any parameter therein (such as when the user changes the order of a process or adds additional steps to the process), it is necessary for the source code of the application to be modified. When the source code is modified, it is also then necessary to recompile the source code in order to provide a working altered application. This process is cumbersome because it requires significant work from the ISV. Thus, users of such software and/or ISVs are discouraged from making changes to user interface elements in these types of situations.

It would be a significant benefit to the art if the user interfaces could be more easily updated in response to these changes, without having to recompile the source code.

### SUMMARY OF THE INVENTION

The present invention provides a significant advance in the updating of user interfaces when the user changes the associated business process.

In one embodiment of the present invention the user changes the process. These changes can include the addition of a step into the process, the reordering of steps in the process, adding or removing an automatic step, etc. When the user makes the change, a process change detection module detects the changes made to the process. The module determines what user interfaces are affected by the change. In some changes only one user interface is affected. However, in other changes a number of user interfaces may be affected by the change. The process change detection component determines what elements on the user interface are affected, and provides this information to a user interface modification module or resource.

The user interface modification module uses the information from the process change detection component to modify the affected user interfaces. If the process change detection component determines that a new user interface is needed, then the user interface modification module can generate or assemble the new interface from a database of default interfaces. Thus, through the use of coding it is possible for the user interface modification resource to "understand" the user interface and construct or modify user interfaces based on this understanding.

Once the user interface has been modified, it is stored in a user interface specification for the application. If additional user interfaces are affected by the change, they are modified according to the same process as the first affected user interface.

### BRIEF DESCRIPTION OF THE DRAWINGS

FIG. 1 is a block diagram of one computing environment in which the present invention may be practiced.
FIG. 2 is a block diagram of an alternative computing environment in which the present invention may be practiced.
FIG. 3 is a flow diagram illustrating an example of a business process.
FIGS. 3A-3D are diagrammatic illustrations of example user interfaces used in FIG. 3.
FIG. 3E is a diagrammatic illustration of the overall presentation of the example user interfaces in the application according to one embodiment.
FIG. 4 is a diagrammatic view of user interface modification in accordance with an embodiment of the present invention.
FIG. 5 is a flow diagram of a method of modifying a user interface in accordance with embodiments of the present invention.
FIG. 6 is a diagrammatic illustration of inserting a step into a business process.
FIG. 7 is a diagrammatic illustration of reordering the steps in a business process.
FIG. 8 is a flow diagram of a method for applying a modification to an existing user interface element in accordance with an embodiment of the present invention.

### DETAILED DESCRIPTION OF ILLUSTRATIVE EMBODIMENTS

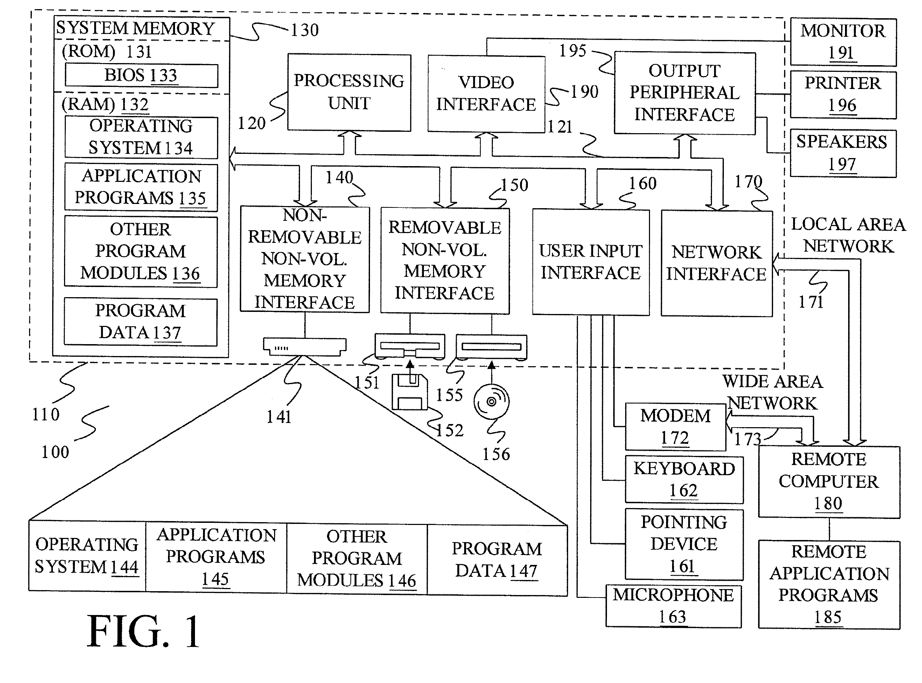

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention is designed to be practiced in distributed computing environments where tasks are performed by remote processing devices that are linked through a communications network. In a distributed computing environment, program modules are located in both local and remote computer storage media including memory storage devices.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 is operated in a networked enviromnent using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

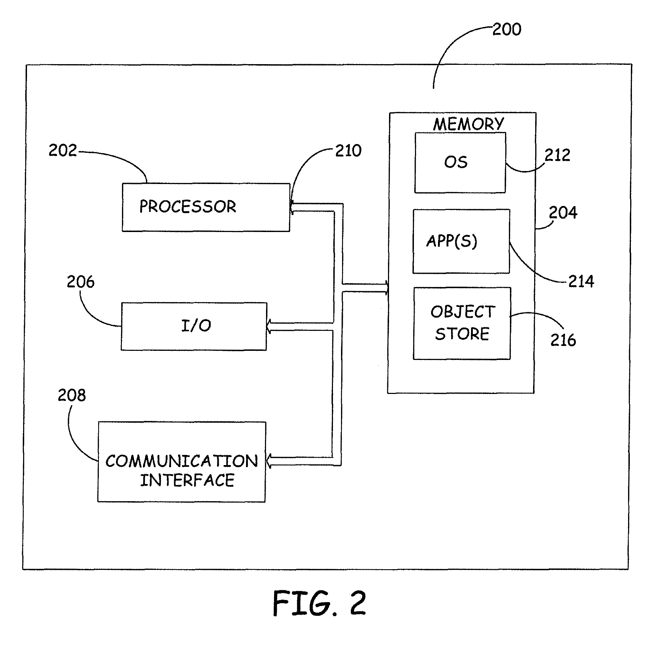

FIG. 2 is a block diagram of a mobile device 200, which is another exemplary computing environment. Mobile device 200 includes a microprocessor 202, memory 204, input/output (I/O) components 206, and a communication interface 208 for communicating with remote computers or other mobile devices. In one embodiment, the aforementioned components are coupled for communication with one another over a suitable bus 210.

Memory 204 is implemented as non-volatile electronic memory such as random access memory (RAM) with a battery back-up module (not shown) such that information stored in memory 204 is not lost when the general power to mobile device 200 is shut down. A portion of memory 204 can be allocated as addressable memory for program execution, while another portion of memory 204 is preferably used for storage, such as to simulate storage on a disk drive.

Memory 204 includes an operating system 212, application programs 214 as well as an object store 216. During operation, operating system 212 is preferably executed by processor 202 from memory 204. Operating system 212, in one preferred embodiment, is a WINDOWS® CE brand operating system commercially available from Microsoft Corporation. Operating system 212 can be designed for mobile devices, and implements database features that can be utilized by applications 214 through a set of exposed application programming interfaces and methods. The objects in object store 216 are maintained by applications 214 and operating system 212, at least partially in response to calls to the exposed application programming interfaces and methods.

Communication interface 208 represents numerous devices and technologies that allow mobile device 200 to send and receive information. The devices include wired and wireless modems, satellite receivers and broadcast tuners to name a few. Mobile device 200 can also be directly connected to a computer to exchange data therewith. In such cases, communication interface 208 can be an infrared transceiver or a serial or parallel communication connection, all of which are capable of transmitting streaming information.

Input/output components 206 include a variety of input devices such as a touch-sensitive screen, buttons, rollers, and a microphone as well as a variety of output devices including an audio generator, a vibrating device, and a display. The devices listed above are by way of example and need not all be present on mobile device 200. In addition, other input/output devices may be attached to or found with mobile device 200 within the scope of the present invention.

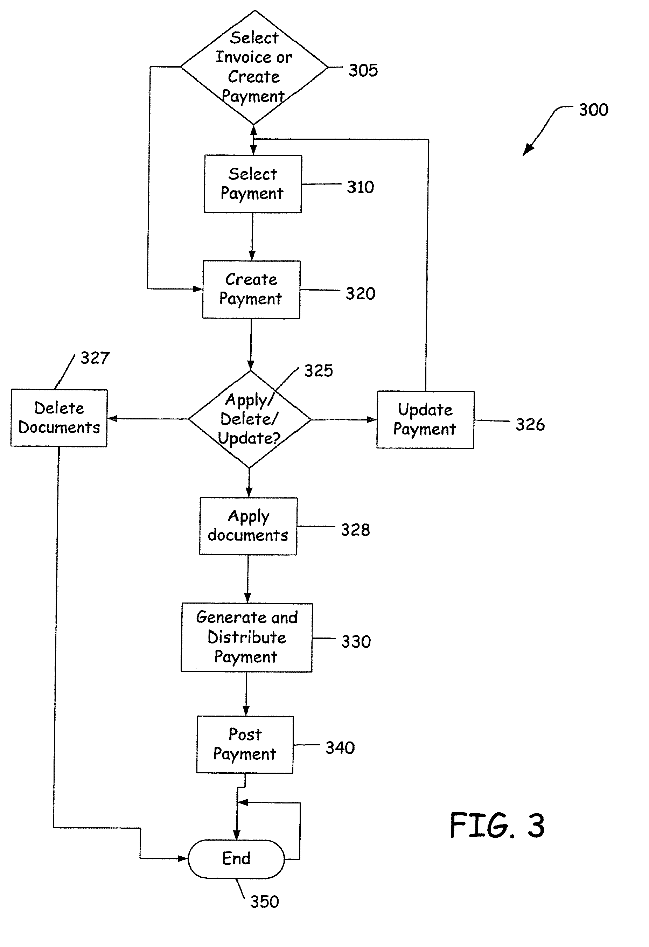

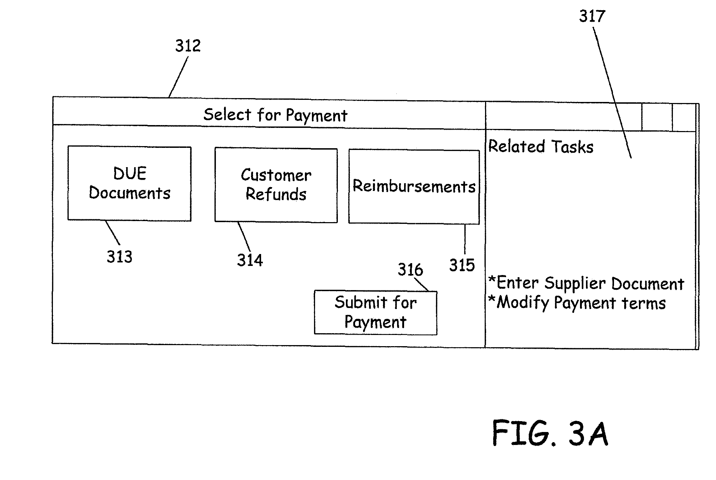

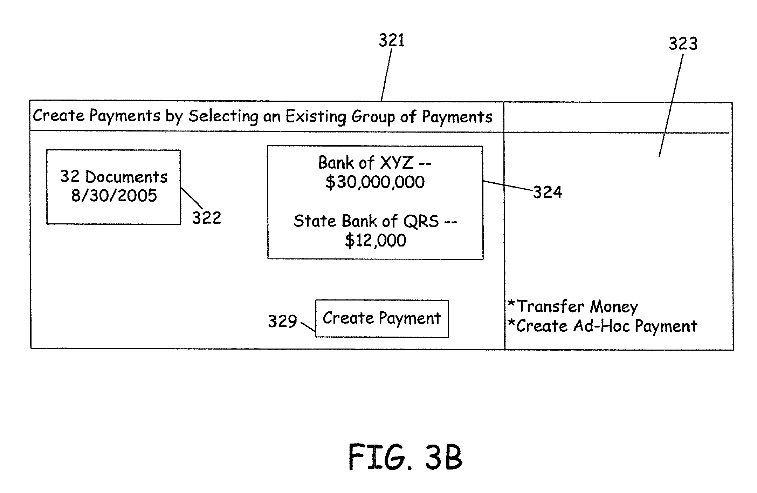

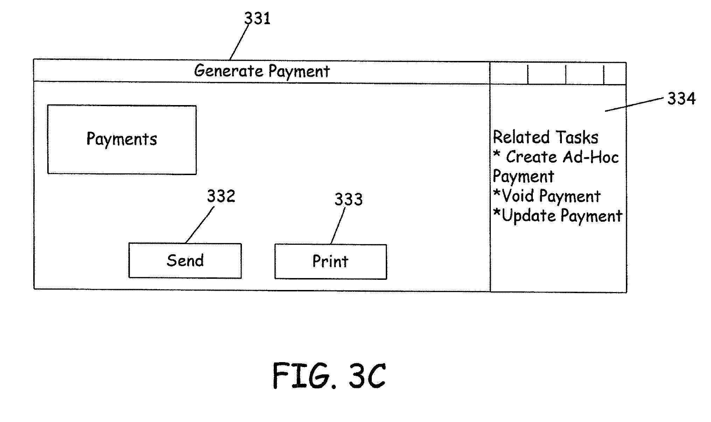

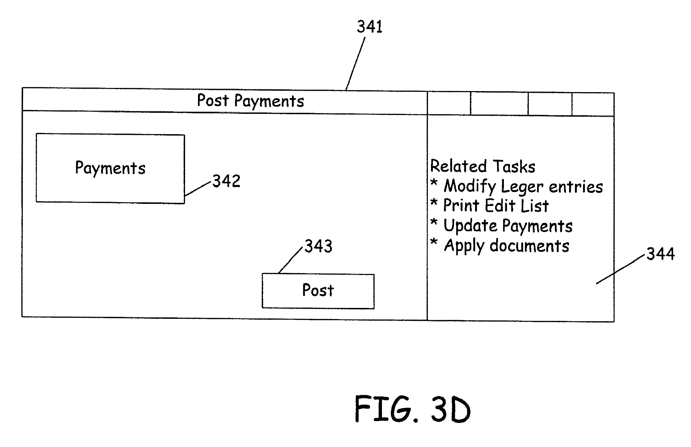

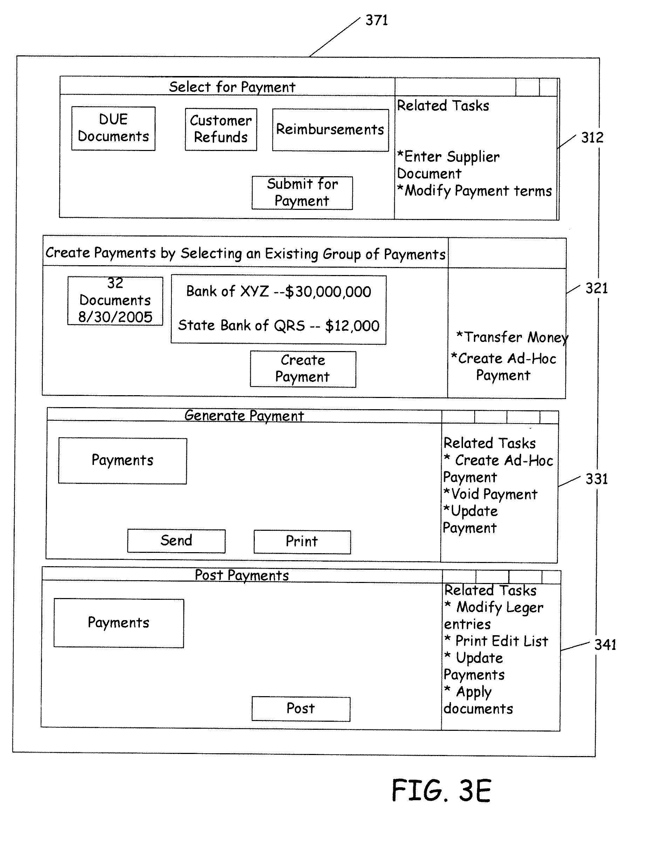

FIG. 3 is a flow diagram illustrating an example business process for paying a supplier. This business process is for illustrative purposes only, and those skilled in the art will readily recognize that other processes can be used with the present invention. Further, the description of business process 300 is provided for a better understanding of the present invention.

Business process 300 includes a series of steps. At a number of the steps the user is presented with a user interface, which allows the user to perform actions for that step in the process. For purposes of this discussion only, some of the user interfaces will be illustrated. However, the user interfaces are provided so that the reader may better understand the changes to the user interfaces that are implemented using the present invention.

Prior to beginning the discussion in detail of FIG. 3, a basic overview of the payment process may be helpful. Corporations of various sizes have different processes that they must execute prior to actually paying a supplier or even an employee. Due to the requirements of the accounting industry and the tax authorities, several documents or papers are generated each time the corporation makes a payment. For example in some corporations, a user will select which suppliers to pay. This is often referred to as selecting payment. Next the user will create a payment, usually by starting the process of paying the supplier. Once a payment is created, it may be applied to a supplier invoice. In this way the corporation knows that money has been allocated from one source against the debt.

Next the user generates the payment. Generation of the payment is more like writing a check to the supplier. However, in today's complicated business environment, payment is often done electronically, or may even be done against a debt the supplier owes the provider. The final step in the payment process is to post the payment. In this step, for instance, the payment is posted to the general ledger or to the supplier, and all accounts are generally updated to reflect the transaction.

At step 305 the user chooses either to select an invoice or create a new payment. If the user decides to select invoices to pay at step 310, the user is presented with a user interface such as user interface 312 illustrated in FIG. 3A. User interface 312 contains information that the user can use to select items for payment. In this example the user interface 312 allows the user to select between due documents 313, customer refunds 314, and reimbursements 315. However other transactions needing to be paid, such as employee payroll and customer refunds, may be presented to the user as well.

User interface 312 also allows the user to select related tasks 317. These related tasks may take the user to another business process or may allow the user to move forward or backwards in the current process to correct an error in a document or other activity.

In any case, once the user has decided to select items for payments the user highlights the transactions to pay and selects the Submit for Payment button 316. This is indicated at block 310 and this advances the process to the step of creating a payment 320.

Step 320 is accessed in business process 300 from either step 305 or step 310. When accessed from step 305, the user is able to create payments without having previously selected items for payment. When step 320 is accessed from step 310, the user is creating payments from a list of previously selected items for payment.. In order to make this selection the user is presented with a user interface such as user interface 321 illustrated in FIG. 3B. User interface 321 allows the user to create payments from the list of selected items for payment 322. At this step the user can select a bank account to pay the selected items 324. Again the user interface provides the user access to related tasks 323 where the user can perform any additional tasks that may be needed to create a payment. It should be noted that at step 320 the document is not yet paid, but is sent on for further processing to generate all of the necessary business documents and papers required by the user to effect a payment.

Once a payment has been created at step 320 the user is then presented with a decision at step 325. The user must decide to update payments, delete payments, or apply the specific documents in the created payments. If the user decides to update payments (such as discovering that they missed a payment) they are returned to step 320 or 310 at step 326. If they chose to delete a payment, they can choose the document in the payments to delete at step 327. If however they decide to apply the documents for payment they advance to step 328. The process of applying a document is a straightforward process that may be done automatically by the process. Step 328 in essence matches an invoice transaction(s) for each payment. The payment process then advances to step 330.

At step 330 the process 300 generates and distributes a payment. The user is presented with a user interface 331 that allows the user to determine the method of the payment. This user interface is illustrated in FIG. 3C. In this version user interface 331 allows the user to either pay via electronic funds transfer (EFT) 332 or via check 333. These buttons 332, 333 are illustratively pull down menu buttons, and can allow the user to make specific selections as to a type of check to print or a note to add to the EFT. A set of related tasks 334 is also provided on user interface 331. Some of these tasks will return the user to earlier steps in process 300, or may take the user to another process. Once finished with step 330 the process advances to step 340.

At step 340 the user actually posts the payment thereby updating the balance sheets maintained by the system. The user is presented with a user interface such as user interface 341 illustrated in FIG. 3D. Through a user interface element 341 the user can view the payments waiting to post 342, and post those payments by actuating Post button 343. User interface 341 allows the user to select a series of related tasks 344. As discussed before, these related tasks can take the user to other processes or to different points in the process 300.

Once the payment has been posted, process 300 allows the user to correct any mistakes. The user can decide to void the payment, or make any corrections. Once the payment is updated, voided or if no changes are desired then, the process for the specific payment ends at step 350.

FIG. 3E illustrates an overall presentation of the user interfaces of FIGS. 3A-3D according to one embodiment of the present invention. When developing the process such as process 300, the developer develops the flow from using a flow diagram such as the diagram of FIG. 3. However, the user only interacts with the user interfaces. Therefore, the user is presented with the user interfaces 312, 321, 331, 341 on a computer screen 371 or other display device. If the system requires additional user interfaces beyond those that will easily fit on the screen these interfaces can be accessed or viewed using a scroll bar, or other scrolling technique.

Since many business process programs (such as the one that implemented process 300 above), are developed by corporations other than the corporations using the programs, the programs may not include all of the features needed by the user or they may have extraneous features not desired by the user. In past systems, in order to change the process to either include or exclude steps or features, a programmer was required to enter the code of the application program to customize the user interfaces and possibly even the process interface.

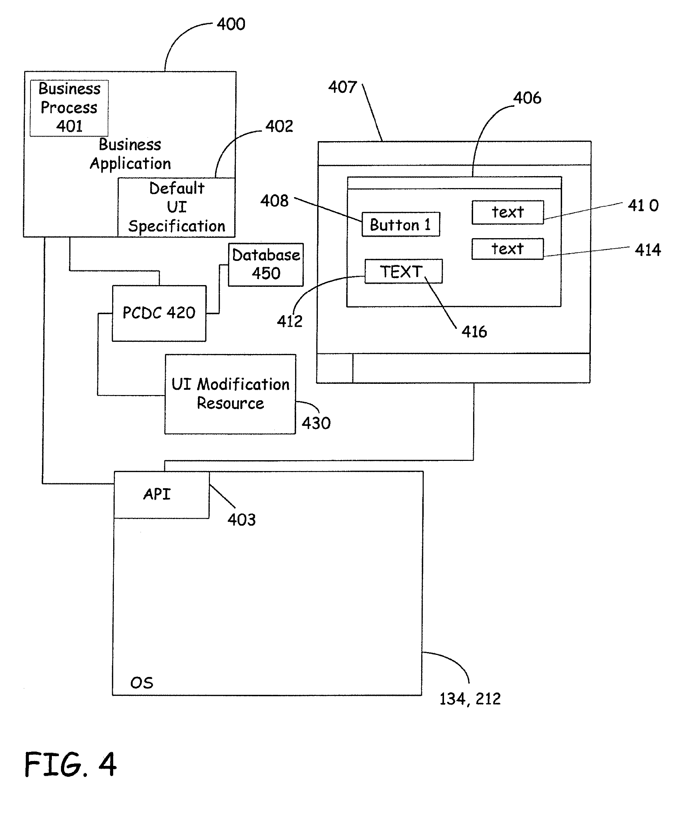

FIG. 4 is a diagrammatic view of user interface generation/modification system in accordance with one embodiment of the present invention. In the past, an application, even a customized application, would generate user interface 407 on a suitable display device, such as monitor 191 (FIG. 1), by making appropriate calls to operating system 134 via one or more application programming interfaces 403. User interface 407, generated by application 400, may include one or more windows 406 each having one or more controls 408, 410, 412, and 414. It is common for a control, such as button 408 to have label text 416 to provide the user with an indication of the function of button 408. If, during the lifetime of application 400, the underlying business process(s) 401 were changed, the associated user interfaces were modified to reflect this change. However, in the past, it was generally necessary to recompile application 400 in order to give effect to this change.

For purposes of the present discussion, it is assumed that application 400 includes at least one associated business process 401, and also includes, or is provided with, user interface specification 402. Specification 402 may take the form of a user interface that is hard-coded into the programming instructions of application 400. However, specification 402 need not be contained within application 400. User interface specification 402 can be any set of instructions or data that completely define user interface 406.

As illustrated, application 400 may employ operating system 134, or 212 to generate user interface 406 via one or more application programming interfaces 403. In accordance with one embodiment of the present invention, when the user changes the business process the change is detected by a process change detection component 420. Detection component 420 determines the change made to the process and also determines what user interfaces and elements of the user interface should be modified, created or assembled as a result of the change.

Process change detection component 420 accesses user interface modification resource 430. Resource 430 may take any suitable form, including an Extensible Markup Language (XML) file, a database entry, or any other suitable data structures. Resource 430 includes information relative to one or more modifications to be made to the original user interface specification 402 as a result of the change. Resource 430 illustratively includes specific information relative to individual user interface elements and their associated properties and the values of those properties. Only user interface elements that are modifiable or assembled are generally specified in resource 430. Accordingly, the modifications detected by component 420 will apply to specific user interface elements specified in resource 430 and are modified by the user interface resource 430. Accordingly, these changes are made at run-time without requiring application 400 to be re-compiled. Further, any property or value of any element of user interface 406 can be modified by placing such modification in resource 430.

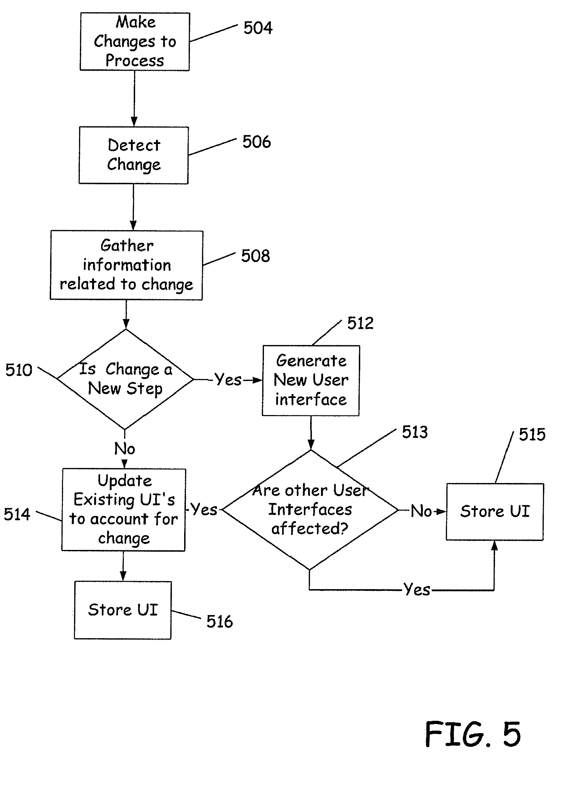

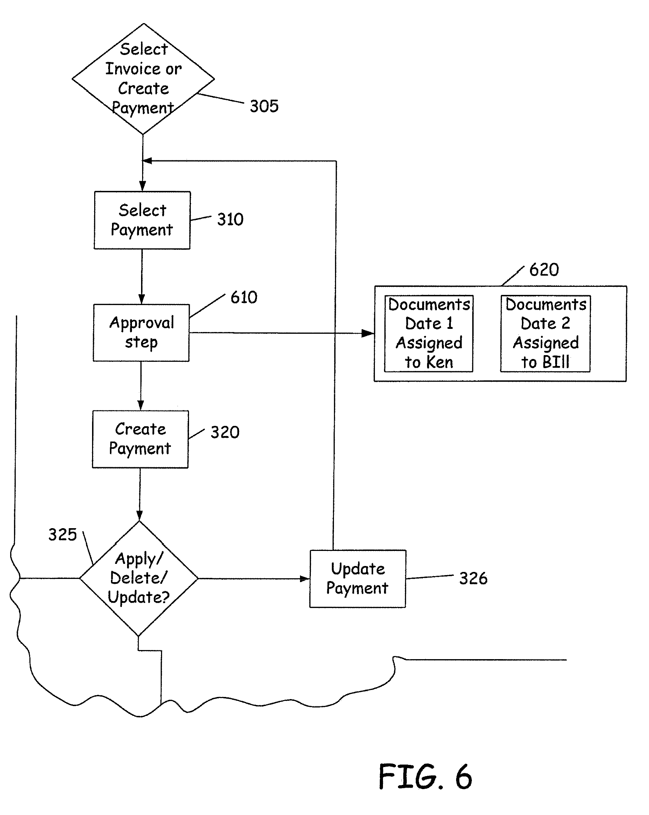

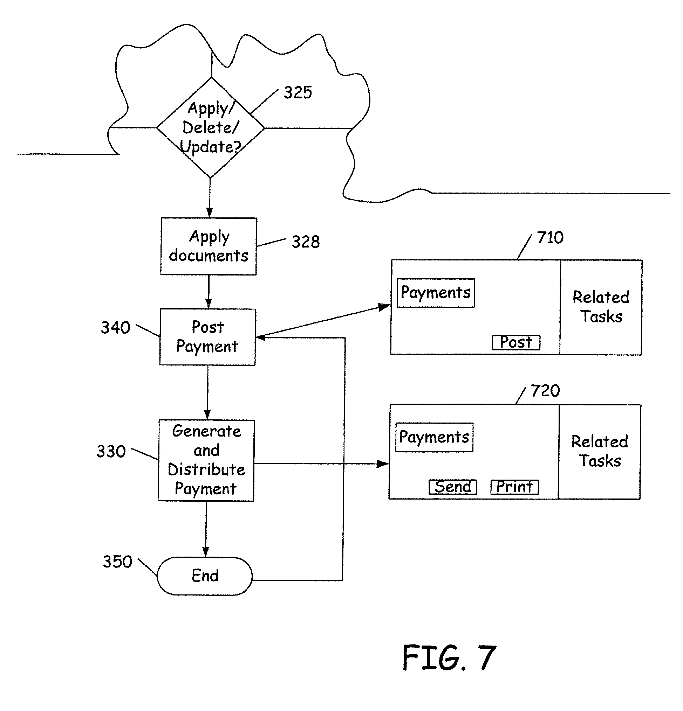

FIG. 5 is a flow diagram illustrating the steps executed by the present invention to modify or generate a user interface when a change in the business process is made. At block 504, the user makes a change or changes to the process of the application. For purposes of this discussion the process will refer back to the process discussed in FIG. 3. These changes can include, by way of example, adding a new step to the process, or reordering some of the steps in the process. An example of changing the order of the process or adding a new step is illustrated with respect to FIGs. 6 and 7.

FIG. 6 illustrates an example of adding a new step between steps 310 and 320 of FIG.3. In this example an approval step is added. The approval step is illustrated as step 610. The approval step requires the generation of a new user interface for the process so that the user can view and understand those items awaiting approval. Further in FIG. 6 the new user interface that is generated is illustrated by element 620.

FIG. 7 illustrates an example of the reordering of steps 330 and 340 of FIG. 3. This reordering can be done for any reason that a business may want to reorder steps in a process. As the steps are reordered, it is necessary to change the user interfaces for each of the steps, and possibly the user interfaces of the prior and post steps to reflect the changes made in the process. The modified user interface is illustrated by element 710, and 720. To understand the differences in the user interface a comparison to the user interfaces illustrated at 331 and 341 is required. In particular several of the elements in the user interfaces 710 and 720 are different from the original user interfaces. In particular the set of related tasks has changed in response to the changes in the process.

At block 506 the changes to the business process are detected. In one embodiment the change is detected by the process change detection component 420 of FIG. 4. However, this detection can occur according to the any known method for detecting a change. Also at this step the program determines the particular type of change that was made (e.g. a step was added, deleted, reordered, etc), and whether a new interface will be needed or if an existing user interface will be modified. At step 508, the program gathers the information needed to generate the modified, or new user interface. The program determines the information provided from the step prior to the changed step and the information expected by the next step in the business process. Further, at step 508 the program determines in the case of a reordering of the steps how the reordered steps originally interacted with each other. This data is stored in a data structure such as a hash table or a metadata table, that is used later on in the process to generate or modify the user interfaces.

At step 510 the program determines if a new user interface is needed or if the existing user interfaces are to be modified based on the information obtained at step 506. If a new user interface is needed the program generates a new user interface for the added step at step 512. In alternative embodiments the user interface can be obtained from the database of interface 450. To generate the new user interface, the program first accesses a datastore, such as database 450, containing at least one default user interface element. However, the database may contain multiple default user interfaces, where each type of step that may be added to the process has its own unique user interface. If the program determines that one or more existing user interfaces are to be modified in response to the change in the process the program modifies the user interface at step 514. This is discussed in greater detail below.

When generating a new user interface, at step 512, the program accesses a user interface generation resource, such as resource 430 in FIG. 4. However, other resources can be used to generate the user interface. The program then uses the data acquired in step 508 to determine the elements that should be present in the new user interface. Further, the program may access metadata containing information related to the neighboring user interfaces to assist in generating the appropriate information or representation for the new user interface. This metadata may include such information about the user interfaces as the name of the user interface element, the properties of the user interface, the values of the properties, any nested user interfaces, graphics that are to be displayed with the user interface, etc. The user interface generation resource then uses this metadata to form the new user interface. Depending on the configuration of the default user interface selected from the user interface generation component the user may be prompted to configure the placement of the elements on the user interface. However, in one embodiment, the default user interface is precoded or organized such that the program will know where to place each element of the user interface without user intervention.

Once the user interface has been generated for the new step, it is stored in the user interface resource. Then the program checks the remaining user interfaces in the process to determine whether any of them need to be modified to account for the newly added step in the process. This is illustrated at step 513. If any of the user interfaces are to be changed the program follows the path through the flow chart to step 514. However, prior to advancing to step 514, the program stores the newly generated user interface in the user interface specification 402. This is illustrated at step 515. If there is no change required to other user interfaces, the program stores the user interface at step 515.

At step 514 process change detection component 420 attempts to access a user interface modification resource, such as resource 430. Within step 514, it is important for process change detection component 420 to know the location of resource 430. In one embodiment, the location of resource 430, whether it is located on the local machine, or across a network, is hard-coded into process change detection component 420 or application 400. However, other embodiments of the invention include presenting the user with a choice of possible locations, or even allowing the user to enter the location information.

The loaded modification resource 430 is parsed to generate a hash table that allows lookup of a user interface element and its associated metadata. Once the hash table has been generated, the program moves to the first or top element in resource 430. In one embodiment, resource 430 lists the user interface modifications in a hierarchical manner such that the first element within resource 430 is also the parent of all elements therein. However, many other variations of storage formats within resource 430, and many other processing regimes can be used. Next, the hash table is consulted to lookup any metadata in the hash table for the element at the top of the chain. A data structure, illustratively, provides the relevant information for that particular user interface element. Next the program determines based on the information obtained at step 508 what elements in the user interface are to be modified based on the changes made to the process.

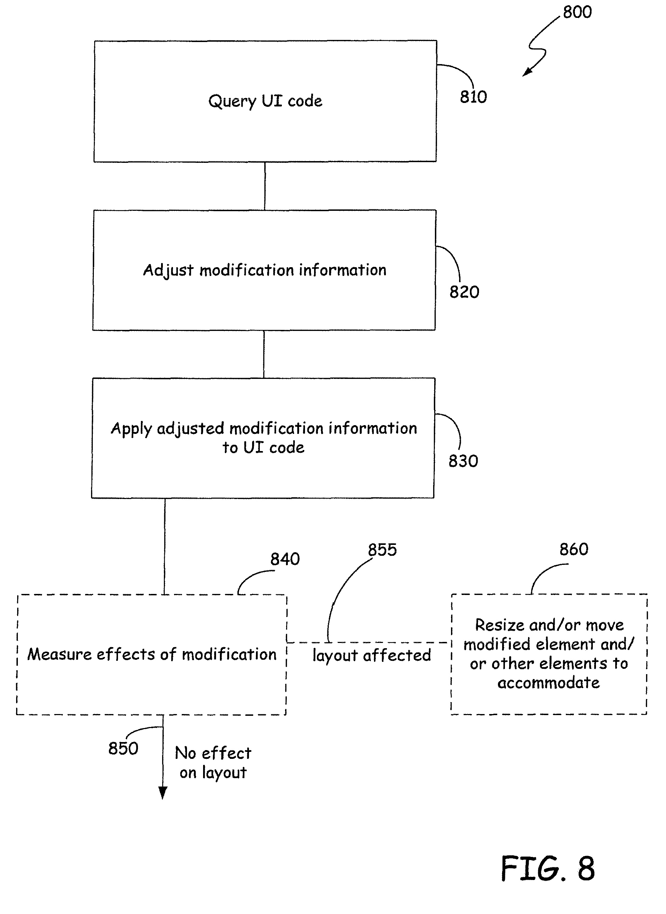

Once the information has been obtained from the lookup table, customization is applied to the appropriate user interface element. A more detailed description of the application of a customization is described below with respect to FIG. 8. Once the customization has been applied it is determined whether the just-customized element contains any nested user interface elements. If there are nested elements the above process is repeated until all nested elements have been modified as necessary. This recursion is a relatively simple and easy way to implement the modifications.

FIG. 8 is a flow diagram illustrating the process that occurs at step 514 of FIG. 5 according to one embodiment of the present invention. The modification of the user interface begins at step 800 where the information gathered at step 508 is compiled and used to determine which elements of the user interface are to be modified. Next at step 810, the user interface code itself within the application 400, or user interface specification 402 is queried. Generally speaking, this is accomplished by using one or more metadata application programming interfaces (APIs) to determine information about the user interface code. For example, within Microsoft's .NET programming framework, this ability is called "reflection".

The ability to query the code provides an important advantage to embodiments of the present invention. Specifically, it allows the application to understand the nature of the user interface code itself. The user interface modification resource 430 uses the metadata API to query the user interface code to determine, for example, the data type of a user interface element being modified by the change in the business process or the new user interface. Then, the associated modification information can be typecast into the appropriate form to directly modify the user interface element without generating an error. Thus, a user interface modification specification 430 written entirely in textual data can modify any suitable types of user interface elements with the textual data being type-cast, as appropriate, as the user interface element is modified. Thus, at step 820, depending on the results of the user interface code query of step 810, the modification information relative to the user interface element is adjusted.

At step 830, the adjusted modification information is applied to the user interface code. In some embodiments, the customization of a user interface element may change the layout or size of that particular user interface element. This layout change may then interfere with one or more other elements in the user interface.

In accordance with embodiments of the present invention, once the adjusted modification information is applied as described with respect to step 830, the effect of the modification is actually measured, or otherwise obtained, as illustrated in optional step 840. For example, if the text of a control is added or otherwise modified such as a button or related tasks, the actual length of the text will likely require the physical control, such as the related tasks section, to become larger as well. The larger button may then not align properly with other controls, or it may even overlap other controls.

If the modification will not impact the user element layout, control passes along line 850 and step 514 ends. However, if the layout will be impacted, control passes along 855 to step 860 where the actual layout of the user interface is adjusted to accommodate the re-sized modification UI element. This accommodation can take the form of simply moving one or more elements that may otherwise interfere with the adjusted UI element. However, adjusting the layout to accommodate the re-sized user interface element can also include adjusting other elements to align them with the re-sized element. Additionally, another aspect of user interface element modification includes the ability to allow resource 430 to specify a completely new location on the user interface for a modified element.

Once the process of step 514 is completed, the modified user interface element is stored in the user interface specification at step 516. At this step the old user interface may also be saved as a back-up version in the event that other difficulties are discovered with the new user interface, or to return to if the process is returned later to the original state.

Although the present invention has been described with reference to particular embodiments, workers skilled in the art will recognize that changes may be made in form and detail without departing from the spirit and scope of the invention.

## Claims

1. A system for modifying a user interface in an application representing a business process having a plurality of steps, the system comprising:
data indicative of a user interface for at least one of the plurality of steps;
a process change detection module configured to determine a change in the business process; and
a user interface modification resource, including modification information relative to the at least one user interface element, configured to receive information determined by the process change detection module and modify the user interface based on the information determined by the process change detection module.

2. The system of claim 1 wherein the user interface modification resource is further configured to generate a new user interface when the detected process change is the addition of a step.

3. The system of claim 1, wherein the user interface modification resource is in the form of XML.

4. The system of claim 1 wherein the user interface modification resource is in the form structured data format.

5. The system of claim 1, wherein the user interface is in the form of a database.

6. The system of claim 1 wherein the process change detection module is further configured to determine which of the at least one user interfaces in the business process are affected by the detected change; and
wherein the user interface modification resource modifies each of the affected user interfaces.

7. A method of automatically modifying a user interface for a business process having a plurality of steps, the method comprising:
changing a portion of the business process;
detecting the change in the business process with a process change detection module;
determining affects of the change on at least one user interface; and
modifying the at least one user interface with a user interface modification resource based upon the determined affects of the change in the business process.

8. The method of claim 7 wherein changing a portion of the business process further comprises:
adding an additional step to the business process.

9. The method of claim 7 wherein changing a portion of the business process further comprises:
reordering the steps of the business process.

10. The method of claim 7 wherein changing a portion of the business process further comprises:
removing an automatic advance in the process.

11. The method of claim 7 wherein determining the affects of the change further comprises:
determining if the change requires a new user interface; and
generating a new user interface in response to the change.

12. The method of claim 7 wherein determining the affects of the change further comprises:
identifying all user interfaces in the process affected by the process change; and
determining the affects of the changes to the process on each of the identified user interfaces.

13. The method of claim 7 wherein determining the affects of the change further comprises:
obtaining modification information relative to at least one user interface element of the user interface;
adjusting a layout of the user interface in response to the obtained modification information.

14. The method of claim 13, wherein layout of the user interface is adjusted based on a size of at least one customized user interface element.

15. The method of claim 14, wherein adjusting the layout includes modifying a layout parameter of at least one other user interface element.

16. The method of claim 13, wherein modifying the user interface includes applying modification information to each user interface element specified by the user interface modification resource.

17. The method of claim 7 further comprising:
displaying the at least one modified user interface with a plurality of other user interface in a single interface.
